# EUROPÄISCHE PATENTSCHRIFT

(11) **EP 1 526 045 B1**
(45) Veröffentlichungstag und Bekanntmachung des Hinweises auf die Patenterteilung: **14.05.2008**
(21) Anmeldenummer: 03078343.5
(22) Anmeldetag: 22.10.2003
(51) Int. Cl.: B60R 21/20, B26F 1/20

(54) **Verfahren zum Herstellen einer Hülle für einen Airbag**
Method for producing an envelope for an airbag
Procédé de production d'une enveloppe pour un module de coussin gonflable

(43) Veröffentlichungstag der Anmeldung: 27.04.2005
(73) Patentinhaber: Advanced Label Technologies B.V., 3565 AK Utrecht (NL)
(72) Erfinder: Verstraeten, Jean-Luc Guy, NL-1215 EB Hilversum (NL)
(74) Vertreter: van Westenbrugge, Andries

(56) Entgegenhaltungen:
- DE-A- 10 009 283
- DE-C- 526 836
- DE-C- 19 705 829
- US-A- 4 027 828
- US-A1- 2002 089 155

## Beschreibung

Die Erfindung betrifft das Herstellen eines Stoßkissensystems oder Airbags für die Verwendung in Fahrzeugen, insbesondere in Straßenfahrzeugen. Solche Airbags finden mehr und mehr Anwendung als Standardvorrichtung in neuen Typen von PKW. Neben den inzwischen herkömmlichen Airbags, die im Lenkrad und dem Armaturenbrett enthalten sind, kommen immer regelmäßiger auch an anderen Stellen Airbags vor. Als Beispiel werden die sogenannten Seitenairbags, die sich neben den Insassen über den Türöffnungen befinden, genannt. Auch Airbags, die in der Höhe des Knies des Fahrers angeordnet sind, sind inzwischen bekannt.

Die Airbags umfassen alle einen in einer sehr kurzen Zeitspanne expandierbaren Ballon, der in einer Hülle enthalten ist, sowie einen Gasgenerator und ein Steuerungssystem, welches bei Detektion von bestimmten Beschleunigungen in Aktion tritt. Der Ballon befindet sich in gefaltetem Zustand in der Hülle, die eine schützende Umhüllung bildet. Das Paket bestehend aus der Hülle mit dem sich darin befindlichen gefalteten Ballon kann auf geeignete Weise in den dazu bestimmten Raum aufgenommen werden.

Die vorliegende Erfindung betrifft eine effizientere Weise der Herstellung der Hülle des Airbags. Diese Hüllen werden aus Bahnenmaterial mit geeigneten Stärke- und Steifheitsmerkmalen hergestellt. Die Materialbahn wird in Teile aufgeteilt, die bedruckt werden, aufeinander gestapelt werden und anschließend gemeinsam durch Stanzen in die gewünschte Form gebracht werden. Danach werden die so erhaltenen Planos mit einer Perforation versehen, anschließend umgefaltet und mittels einer Schweißnaht oder Nähnaht zu einer Hülle geformt. Die Perforation muss bestimmte sorgfältig definierte Merkmale aufweisen, so dass garantiert wird, dass sich der Ballon auf die richtige Weise entfalten kann. Weiter können beim Stanzen Aussparungen im Plano an der Stelle, wo die fertige Hülle mit dem Ballon durch Klemmen an der Fahrzeugkarosserie befestigt werden kann, angebracht werden.

Die so hergestellten Hüllen werden anschließend an den Hersteller der Airbags geliefert, der anschließend den gefalteten Ballon einbringt. Dies bedeutet, dass die Hüllen eine nach der anderen behandelt werden müssen, sowohl während deren Herstellung als auch während des Einbringens des Ballons. Eine solche Vorgehensweise ist umständlich und erfordert viel Handarbeit.

Die Erfindung bezieht sich auf ein Verfahren zum Herstellen einer Hülle für ein Stoßkissensystem (Airbag) nach Anspruch.

Aus US-A-4027828 ist ein Verfahren bekannt zum Herstellen eines Planos, folgende Schritte umfassend:
- das Schaffen einer Bahn biegsamen relativ zugfesten Materials,
- das Stanzen der Materialbaln zur Bildung einer aneinanderangeschlossenen Reihe von Planos.

Aufgabe der Erfindung ist an erster Stelle ein Verfahren zum Herstellen eines Planos für eine Hülle für einen Airbag zu schaffen, welches durch eine Größere Effizienz und Qualität gekennzeichnet wird. Diese Aufgabe wird gelöst durch das Verfahren des Anspruchs 1.

Das erfindungsgemäße Verfahren kann auf verschiedene Weisen ausgeführt werden. Als Beispiel wird das ständig entlang den verschiedenen Bearbeitungsstationen führen der Materialbahn genannt, im Zusammenhang mit dem direkt aufeinanderfolgenden Ausführen der erforderlichen Herstellungsschritte. Bevorzugt wird jedoch ein Verfahren, welches umfasst: zuerst das Aufrollen der Reihe von aneinandergeschlossenen Planos und das anschließende Abrollen der Reihe von Planos im Zusammenhang mit dem Anbringen der Schwächungslinie und/oder der Befestigungsnaht.

Gemäß einer Variante der Erfindung können die Planos voneinander getrennt werden, nachdem diese bedruckt und gestanzt sind. Die Herstellung der Planos selbst erfolgt dann auf eine rationalisierte Weise. Danach werden die Planos zum Beispiel auf bekannte Weise gestapelt, und anschließend pro Stück zu einer Hülle für einen Airbag geformt.

Die Herstellung der späteren Hülle kann dann in unterbrochenen Schritten ausgeführt werden, die zeitlich und/oder räumlich getrennt sind, wobei trotzdem der Vorteil einer rationalisierten Herstellung möglich bleibt dank dem Arbeiten mit Rollen von Planos.

An zweiter Stelle betrifft die Erfindung weiter das Herstellen der Hülle selbst. Erfindungsgemäß wird dies erreicht durch die ergänzenden Schritte des:
- Anbringens der Schwächungslinie in der Materialbahn,
- Anbringens der Befestigungsnaht zur Bildung einer zusammengeschlossenen Reihe von miteinander verbundenen Hüllen.

Beim erfindungsgemäßen Verfahren ist die Herstellung der Hüllen in weitgehendem Maße rationalisiert, indem bei den verschiedenen Verfahrensschritten möglichst gemäß einem ständigen Prozess gearbeitet wird. Dies bedeutet, dass die verschiedenen Verfahrensschritte möglichst auf einer durchgehenden Materialbahn ausgeführt werden. Dadurch entfällt das lästige Handhaben von separaten Teilen, wie die losen Planos, die beim bekannten Verfahren entstehen. Die durchgehende Bahn kann wesentlich einfacher gehandhabt werden und ermöglicht es, die Herstellung in weitgehendem Maße zu automatisieren.

Erfindungsgemäß kann das erfindungsgemäße Verfahren auch die Schritte des Aufrollens der Reihe von Hüllen, das Abrollen der Reihe von Hüllen, sowie das nach dem Abrollen voneinander Trennen der Hüllen umfassen. Dem Hersteller der Airbags kann in jenem Fall eine Rolle mit Hüllen geliefert werden, die erst beim Anbringen der entsprechenden Ballons darin voneinander getrennt werden. Eine solche Vorgehensweise ermöglicht auch beim letzten Herstellungsschritt der Airbags eine weitere Automatisierung. Weiter können die Hüllen jedoch auch direkt voneinander getrennt werden, im Zusammenhang mit der Lieferung von zum Beispiel gestapelten Hüllen.

Das Verfahren umfasst vorzugsweise weiter das Anbringen einer Schwächungslinie zwischen zwei zusammengeschlossenen Hüllen im Zusammenhang mit deren Trennen. Eine solche Schwächungslinie ist eine Perforationslinie.

Die Befestigungsnaht kann angebracht werden durch Nähen, Ultraschallschweißen und Heißversiegelung. Weiter kann das Verfahren das Bedrucken der Materialbahn mit Information bezüglich der aus jener Bahn herzustellenden Hüllen umfassen. Insbesondere kann es sich dabei um das Aufrollen der Materialbahn im Anschluß an deren Bedruckung sowie das Abrollen der bedruckten Materialbahn im Zusammenhang mit deren Stanzung und/oder Anbringung der nominalen Schwächungslinie und/oder das darin Anbringen der Befestigungsnaht handeln.

Die Erfindung betrifft weiter eine Rolle aus einer Reihe von Planos, hergestellt mittels des oben beschriebenen Verfahrens, sowie eine Rolle aus einer Reihe von Hüllen, hergestellt mittels des oben beschriebenen Verfahrens.

Anschließend wird die Erfindung näher anhand einer in den Figuren dargestellten Reihe von Schritten beim Ausführen des Verfahrens erläutert.

Die Figur 1a, 1b zeigt den ersten Schritt des Bedruckens.

Die Figur 2a, 2b zeigt den zweiten Schritt des Perforierens und des Stanzens.

Die Figur 3a und 3b zeigt den dritten Schritt des doppelten Faltens und Nähens, Schweißens und/oder Heißversiegelns.

Die Figur 4a und 4b zeigt das Trennen der einzelnen Hüllen voneinander.

Die Figur 5 und 6 zeigt alternative Schritte beim Herstellen von Planos.

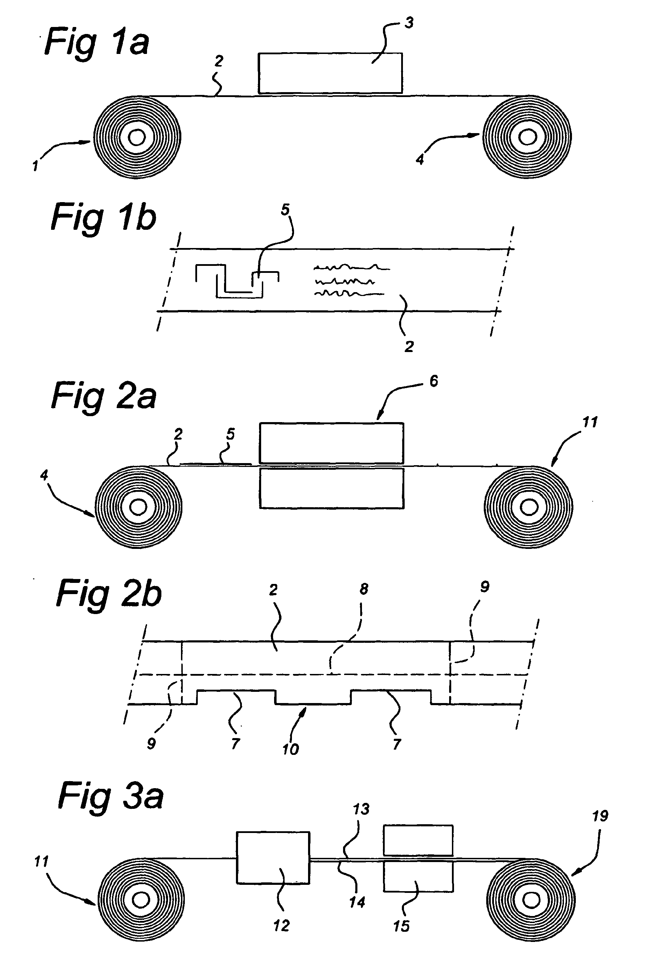

Wie dargestellt in Figur 1a wird beim erfindungsgemäßen Verfahren zum Herstellen einer Hülle für einen Airbag von einer Rolle 1 mit Material 2 ausgegangen. Dieses Material ist an sich bekannt, und ist ausreichend biegsam und zugfest, um den aufblasbaren Ballon des Airbags aufzunehmen.

Von der Rolle 1 wird eine Materialbahn 2 abgerollt, die durch eine Druckstation 3 geführt wird. Anschließend wird die so bedruckte Materialbahn auf der Rolle 4 aufgerollt. Wie dargestellt in Figur 1b ist auf der Materialbahn 2 ein bestimmter Aufdruck 5 angebracht, wie Typenangabe, Hinweise für den Gebrauch und ähnliches. Anschließend wird von der Rolle 4 die bedruckte Bahn 2 abgewickelt und durch die Station 6 geführt, wie dargestellt in Figur 2a. Darin wird die Materialbahn 2 gestanzt und perforiert.

Wie dargestellt in Figur 2b werden der Materialbahn bei diesem Stanzen bestimmte Formen 7 gegeben, die im fertigen Produkt vorhanden sein müssen, zum Beispiel im Zusammenhang mit dessen Aufhängung an der Fahrzeugkarosserie. Ebenfalls wird eine Längsperforation 8 angebracht. Diese Längsperforation 8 muss hohen Anforderungen entsprechen, da im fertigen Produkt an jener Stelle ein Nachgeben beim Aufblasen des Ballons auftreten soll.

In der Station 6 werden ebenfalls Querperforationen 9 angebracht, zwischen denen der insgesamt mit 10 bezeichnete Plano definiert ist. Diese Planos 10 werden beim weiteren Verlauf des Verfahrens jeder eine Hülle bilden. Die so bearbeitete Materialbahn 2 wird auf der Rolle 11 aufgerollt.

Wie dargestellt in Figur 3a wird diese Rolle 11 anschließend abgerollt und durch eine Station 12 geführt, in der auf bekannte Art und Weise die Materialbahn 2 an der Längsperforationslinie 8 doppelgefaltet wird. Als Alternative kann die Materialbahn auch auf einem Abstand von, und parallel zur Längsperforationslinie zusammengefaltet werden. Die beiden Teile 13, 14 der Materialbahn 2 sind dargestellt.

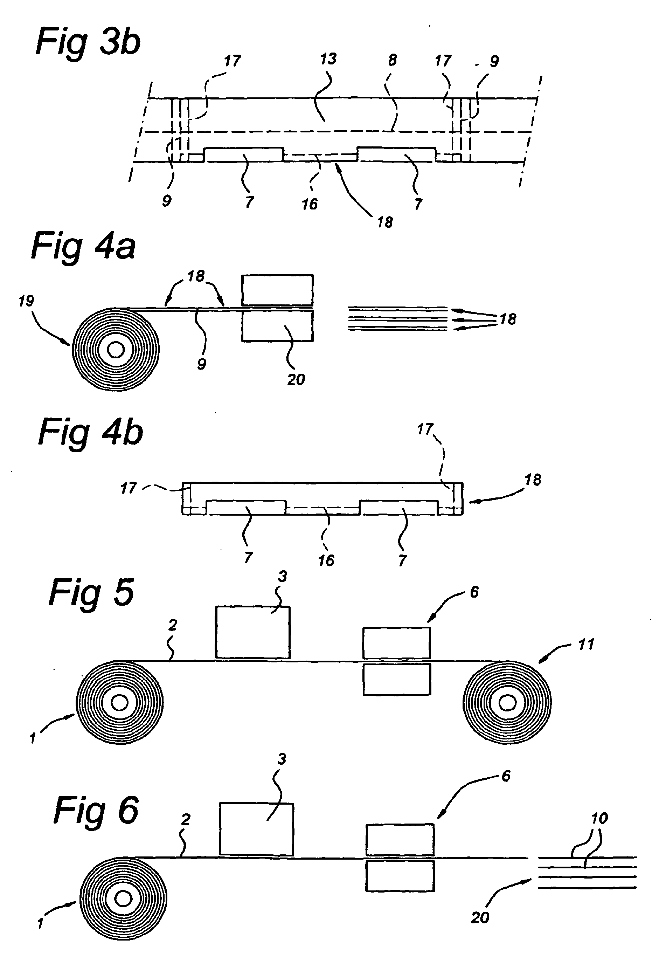

Danach wird, wie in der Figur 3b dargestellt, in Station 15 dafür gesorgt, dass die beiden Teile 13, 14 mittels einer Längsnaht 16 und Quernähten 17 aneinander geheftet werden.

In diesem Moment erhält man fertige Hüllen 18, die jedoch an der Stelle der Querperforationen 9 noch aneinander befestigt sind. Diese Reihe von Hüllen 18 wird anschließend auf der Rolle 19 aufgewickelt.

Die Rolle 19 mit aneinander verbundenen Hüllen 18 kann nun auf verschiedene Weisen behandelt werden. Gemäß einer ersten Möglichkeit wird diese Rolle dem Abnehmer geliefert, der anschließend die Hüllen 18 voneinander trennt, indem er die Perforationen 9 bricht. Anschließend können die Ballone in den entsprechenden Hüllen 18 angebracht werden.

Wie dargestellt in Figur 4 erfolgt dies an der Stelle der Trennvorrichtung 20, wobei man einen Stapel von Hüllen 18 erhält.

In der Variante der Figur 5 ist dargestellt, dass das Bedrucken der Materialbahn 2 in der Druckstation 3 und das Formen der Planos durch den Schritt des Stanzens in der Station 6 auch direkt anschließend aufeinander ausgeführt werden kann. Die so bedruckte und gestanzte Materialbahn 2 wird anschließend auf der Rolle 11 aufgerollt, die anschließend wieder im Schritt, wie dargestellt in Figur 3a, zur Bildung der Hülle verwendet werden.

In der Variante der Figur 6 ist dargestellt, dass nach dem Abrollen der Rolle 1 die Materialbahn 2 wie vorher beschrieben in Druckstation 3 bedruckt werden kann und in Stanzstation 6 gestanzt werden kann. Dadurch ist bereits eine gewisse Rationalisierung in der Herstellung von Planos erreicht. Die Planos können anschließend von der Materialbahn 2 zu einem Stapel 20 aus separaten Planos 10, die anschließend auf herkömmliche Weise verarbeitet werden können, getrennt werden.

## Patentansprüche

1. Verfahren zum Herstellen eines Planos (10) für eine Hülle (18) für ein Stoßkissensystem, welches innerhalb einer sehr kurzen Zeitspanne, wie einigen Millisekunden, expandierbar ist und welches bestimmt ist für die Anwendung in einem Fahrzeug zum Schutz eines seiner Insassen gegen Kollisionen bezüglich des Inneren des Fahrzeugs, welche Hülle (18):
- zum Aufnehmen eines gefalteten Stoßkissens ausgeführt ist,
- ein biegsames, zugfestes Material (2) umfasst,
- wenigstens eine nominale Schwächungslinie (8) umfasst, die bestimmt ist, um beim Expandieren des Stoßkissens nachzugeben, und
- wenigstens eine Befestigungsnaht (16, 17) an der Stelle, wo gegenüberliegende Teile (13, 14) des Materials (2) aneinander befestigt sind, umfasst
folgende Schritte umfassend;
- das Schaffen einer Bahn biegsamen, zugfesten Materials (2),
- das Stanzen der Materialbahn (2) zur Bildung von bestimmten Formen (7) und das Anbringen von Querperforationen zur Herstellung einer aneinander geschlossenen Reihe von Planos (10), die jeder für eine Hülle (18) bestimmt sind,
- das Anbringen der nominalen Schwächungslinie (8) jeweils in den Planos (10) der aneinander geschlossenen Reihe von planos (20).

2. Verfahren nach Anspruch 1, umfassend:
- das Aufrollen der Reihe von aneinandergeschlossenen Planos (10),
- das Abrollen der Reihe von Planos (10) vor dem Schritt des Anbringens der Schwächungslinie (8, 9) und/oder der Befestigungsnaht (16, 17).

3. Verfahren nach Anspruch 1 oder 2 zum Herstellen einer Hülle (18) für ein Stoßkissensystem, umfassend:
- das Anbringen der Schwächungslinie (8) in der Bahn des Materials (2),
- das Anbringen der Befestigungsnaht (16, 17) zur Bildung einer aneinandergeschlossenen Reihe von miteinander verbundenen Hüllen (18),
- das Aufrollen der Reihe von Hüllen (18),
- das Abrollen der Reihe von Hüllen (18),
- das nach dem Abrollen voneinander Trennen der Hüllen (18).

4. Verfahren nach Anspruch 1, 2 oder 3, umfassend das Anbringen einer Schwächungslinie (9) zwischen jeweils zwei aneinandergeschlossenen Hüllen (18), und das Trennen dieser Hüllen.

5. Verfahren nach einem der vorhergehenden Ansprüche, umfassend das Anbringen der Befestigungsnaht (16, 17) mittels Nähens.

6. Verfahren nach einem der vorhergehenden Ansprüche, umfassend das Anbringen der Befestigungsnaht (16, 17) mittels Schweißens.

7. Verfahren nach Anspruch 1, umfassend das voneinander Trennen der Planos (10).

8. Verfahren nach einem der vorhergehenden Ansprüche, umfassend das Bedrucken der Materialbahn (2) mit Information bezüglich der aus jener Bahn (2) herzustellenden Hüllen (18).

9. Verfahren nach Anspruch 8, umfassend:
- das Aufrollen der Materialbahn (2) im Anschluß an deren Bedruckung,
- das Abrollen der bedruckten Materialbahn (2) vor dem Schritt des deren Stanzens und/oder Anbringens der nominalen Schwächungslinie (8) in Längsrichtung der Bahn und/oder des darin Anbringens der Befestigungsnaht (16, 17).

10. Rolle (11) aus einer Reihe von Planos (10) hergestellt mittels des Verfahrens nach Anspruch 2.

11. Rolle (19) aus einer Reihe von Hüllen (18) hergestellt mittels des Verfahrens nach einem der Ansprüche 3-8.

## Claims

1. Method for producing a sheet (10) for an envelope (18) for an airbag system, which is expandable within a very short period of time, such as a few milliseconds and which is intended for use in a vehicle to protect its passengers against collisions with respect to the interior of the vehicle, which envelope (18):
- is made to accommodate a folded airbag,
- comprises a flexible material (2) with tensile strength,
- comprises at least one nominal line of weakness (8), which is intended to give when the airbag expands and
- comprises at least one fixing seam (16, 17) at the place where opposite parts (13, 14) of the material (2) are fixed to each other
comprising the following steps:
- producing a web of flexible material (2) with tensile strength,
- blanking the web of material (2) to form specific shapes (7) and applying transverse perforations to produce a series of sheets (10), each of which is intended for one envelope (18),
applying the nominal line of weakness (8) each time in the sheets (10) of the series of sheets (10).

2. Method according to claim 1, comprising:
- the rolling up of the series of sheets (10) connected to each other,
- the unrolling of the series of sheets (10) prior to the step of applying the line of weakness (8, 9) and /or the fixing seam (16, 17).

3. Method according to claim 1 or 2 for producing an envelope (18) for an airbag system, comprising:
- the application of the line of weakness (8) to the web of the material (2),
- the application of the fixing seam (16, 17) to form a connected series of envelopes (18), which are linked to each other,
- the rolling up of the series of envelopes (18),
- the unrolling of the series of envelopes (18),
- the detachment of the envelopes (18) from each other following unrolling.

4. Method according to claim 1, 2 or 3 comprising the application of a line of weakness (9) between two respective envelopes (18) connected to each other and the detachment of these envelopes.

5. Method according to one of the preceding claims, comprising the application of the fixing seam (16, 17) by way of sewing.

6. Method according to one of the preceding claims, comprising the application of the fixing seam (16, 17) by way of welding.

7. Method according to claim 1, comprising the detachment of the sheets (10) from each other.

8. Method according to one of the preceding claims, comprising the printing of the web of material (2) with information concerning the envelopes (18) to be produced from the respective web (2).

9. Method according to claim 8, comprising:
- the rolling up of the web of material (2) following its printing,
- the unrolling of the printed web of material (2) prior to the step of blanking and / or the application of the nominal line of weakness (8) in the longitudinal direction of the web and / or the application of the fixing seam (16, 17) thereto.

10. Roll (11) made of a series of sheets (10) produced by means of the method according to claim 2.

11. Roll (19) made of a series of envelopes (18) produced by means of the method according to one of claims 3-8.

## Revendications

1. Procédé de production d'un in-plano (10) pour une enveloppe (18) pour un module de coussin gonflable, lequel est extensible en un laps de temps très court, comme par exemple quelques millisecondes, et lequel est destiné à l'application dans un véhicule dans le but de protéger un de ses occupants contre les collisions par rapport à l'intérieur du véhicule, laquelle enveloppe (18) :
- est réalisée pour recevoir un coussin gonflable plié,
- comprend une matière (2) souple et résistante à la traction,
- comprend au moins une ligne d'affaiblissement nominale (8), qui est définie pour s'affaisser lors de l'extension du coussin gonflable, et
- comprend au moins une jointure de fixation (16, 17) à l'endroit où des sections opposées (13, 14) de la matière (2) sont fixées l'une à l'autre,
comprenant les étapes suivantes ;
- la création d'une bande de matière souple et résistante à la traction (2),
- le poinçonnage de la bande de matière (2) pour former certaines formes (7) et l'application de perforations transversales pour réaliser une série continue d'in-plano (10), qui sont chacun destinés à une enveloppe (18),
- l'application de la ligne d'affaiblissement nominale (8) chaque fois dans les in-plano (10) de la série continue d'ín-plano (10),

2. Procédé selon la revendication 1, comprenant :
- l'enroulement de la série d'in-plano (10) reliés les uns aux autres,
- le déroulement de la série d'in-plano (10) avant l'étape de l'application de la ligne d'affaissement (8, 9) et/ou de la jointure de fixation (16, 17).

3. Procédé selon la revendication 1 ou 2 pour la production d'une enveloppe (18) pour un module de coussin gonflable, comprenant :
- l'application de la ligne d'affaiblissement (8) dans la bande de matière (2),
- l'application de la jointure de fixation (16, 17) pour réaliser une série continue d'enveloppes (18) liées les unes avec les autres,
- l'enroulement de la série d'enveloppes (18),
- le déroulement de la série d'enveloppes (18),
- la séparation des enveloppes (18) les unes des autres après le déroulement.

4. Procédé selon la revendication 1, 2, ou 3, comprenant l'application d'une ligne d'affaiblissement (9) entre chaque paire d'enveloppes (18) continue et la séparation de ces enveloppes.

5. Procédé selon l'une quelconque des revendications précédentes, comprenant l'application de la jointure de fixation (16, 17) par couture.

6. Procédé selon l'une quelconque des revendications précédentes, comprenant l'application de la jointure de fixation (16, 17) par soudage.

7. Procédé selon la revendication 1, comprenant la séparation des in-plano (10) les uns des autres.

8. Procédé selon l'une quelconque des revendications précédentes, comprenant l'impression de la bande de matière (2) avec une information concernant les enveloppes (18) à réaliser à partir de cette bande (2).

9. Procédé selon la revendication 8, comprenant :
- l'enroulement de la bande de matière (2) à la suite de son impression,
- le déroulement de la bande de matière (2) imprimée, avant l'étape de son poinçonnage et/ou de l'application de la ligne d'affaiblissement nominale (8) dans le sens longitudinal de la bande et/ ou de l'application de la jointure de fixation (16, 17).

10. Rouleau (11) comprenant une série d'in-plano (10) réalisé par l'intermédiaire du procédé selon la revendication 2.

11. Rouleau (19) comprenant une série d'enveloppes (18) réalisé par l'intermédiaire du procédé selon l'une des revendications 3 à 8.
